Europäisches Patentamt

European Patent Office

Office européen des brevets

(19)

(11) **EP 1 521 273 A2**

(12) **EUROPEAN PATENT APPLICATION**

(43) Date of publication:
06.04.2005 Bulletin 2005/14

(51) Int Cl.⁷: **G21K 4/00**, C09K 11/08

(21) Application number: 04104540.2

(22) Date of filing: 20.09.2004

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Yanagita, Takafumi**<br>  **Tokyo, Tokyo 191-8511 (JP)**<br>• **Mishina, Noriyuki**<br>  **Tokyo, Tokyo 191-8511 (JP)** |
| (30) Priority: **30.09.2003 JP 2003341610** | (74) Representative:<br>**Gille Hrabal Struck Neidlein Prop Roos** |
| (71) Applicant: **Konica Minolta Medical & Graphic Inc.**<br>**Tokyo 163-0512 (JP)**<br>Designated Contracting States:<br>**DE FR GB** | **Patentanwälte**<br>**Brucknerstrasse 20**<br>**40593 Düsseldorf (DE)** |

(54) **Radiographic image conversion panel and method for producing radiographic image conversion panel**

(57)    A radiographic image conversion panel includes: a support on which a photostimulable phosphor layer containing a photostimulable phosphor is formed; and a protective layer for covering the photostimulable phosphor layer, wherein the photostimulable phosphor layer comprises a layer having the particle crystal structure containing a particle phosphor provided on a side of the support, and a layer having the column crystal structure containing a column phosphor provided on a side of the protective layer.

**EP 1 521 273 A2**

**Description**

BACKGROUND OF THE INVENTION

Field of the Invention

The present invention relates to a radiographic image conversion panel and a method for producing a radiographic image conversion panel made by forming photostimulable phosphor layer containing a photostimulable phosphor on a support and cover the photostimulable phosphor with a protective layer.

Description of Related Art

Hitherto so-called radiation method using silver salt has been applied to obtain a radiation image. On the other hand, a method for imaging a radiation image without the use of the silver salt has been developed. That is, radiation passing through a subject is absorbed by a photostimulable phosphor. Then the photostimulable phosphor is excited by some sort of energy to be made to emit radiation energy stored in the photostimulable phosphor as a photostimulated luminescence, and the luminescence is detected to be transformed into an image. This method has been disclosed.

As a concrete method, a radiographic image conversion method using a panel that has a photostimulable phosphor layer provided on a support and using one or both of visible rays and infrared rays as excitation energy, is known (for example, see US 3,859,527 specification).

In recent years, a radiographic image conversion panel using photostimulable phosphor having a substrate of alkali halide such as Cs Br and doped with Eu has been proposed as a radiographic image conversion method using photostimulable phosphor with high luminance, high sensitivity and high sharpness. In particular, by using Eu as activator, it is possible to improve X-ray conversion efficiency, which had been impossible.

On the other hand, a radiographic image conversion panel with higher sharpness has been required in analysis of diagnostic imaging. As a means for improvement of sharpness, for example, there have been attempts to improve sensitivity and sharpness by controlling a shape of formed photostimulable phosphor.

As one of these attempt, for example, a radiographic image conversion panel having a photostimulable phosphor layer wherein elongated column crystals tilting at a certain degree to the normal direction of a support is formed on the support by a vapor phase deposition method (for example, see JP-Tokukaihei-2-58000A).

However the photostimulable phosphor layer having the above-described column crystal structure has a problem that the crystal structure is disturbed on the interface of the support and excitation diode laser beam is diffused, thereby the sharpness is decreased.

Consequently a radiographic image conversion panel in which a column crystal structure composed of basic component of phosphor is formed by an electron beam evaporation method, and on the column crystal structure, another column crystal structure composed of the basic component and an activator component of phosphor is deposited by an electron beam evaporation method, and thereby a phosphor layer is formed, is known (see JP-Tokukai-2003-50298A).

However the radiographic image conversion panel described in JP-Tokukai-2003-50298A comprises a layer having a column crystal structure comprising a basic component of photostimulable phosphor and a layer having the a column crystal structure comprising the basic component and an activator component and thus has a multiplex layer structure of column crystal structure. Therefore the radiographic image conversion panel is not excellent at graininess. That is, image unevenness occurs owing to variation of respective crystals constituting the column crystal structure, and image becomes unclear owing to difference of luminance of respective crystals.

SUMMARY OF THE INVENTION

The present invention has been accomplished with the view to the above circumstance. An object of the present invention is to provide a radiographic image conversion panel with good graininess and capable of significantly improving the quality of a radiographic image and a method for producing the radiographic image conversion panel.

To achieve the above object, a radiographic image conversion panel of the present invention comprises:

a support on which a photostimulable phosphor layer containing a photostimulable phosphor is formed; and
a protective layer for covering the photostimulable phosphor layer,

wherein the photostimulable phosphor layer comprises a layer having a particle crystal structure containing a particle phosphor provided on a side of the support, and a layer having a column crystal structure containing a column phosphor provided on a side of the protective layer.

According to the radiographic image conversion panel of the present invention, because the photostimulable phosphor layer comprises the layer having the particle crystal structure containing a particle phosphor provided on the side of the support, and the layer having the column crystal structure containing a column phosphor provided on the side of the protective layer, the graininess is good, variation of respective crystals constituting the layer having the column crystal structure can be made uniform and image unevenness can be removed. The difference of luminance of respective crystals of the layer having the column crystal structure can be reduced and image roughness is preventable. Therefore it is possible to improve the quality of a radiographic image significantly.

Also, in the radiographic image conversion panel of the present invention, it is preferable that the thickness of the layer having the particle crystal structure is not less than 0.5 μm and not more than half of a thickness of the photostimulable phosphor layer because it is possible to make the graininess excellect.

The thickness of the layer having the particle crystal structure is regulated in the above-described range because the variation and the difference of luminance of respective crystals of layer having the column crystal structure cannot be made uniform owing to thin layer having the column crystal structure in case of less than 0.5 μm, and to the contrary, unevenness and difference of luminance of crystals of the layer having the particle crystal structure occur in case of more than half of the thickness of the photostimulable phosphor layer.

In particular, the thickness of the layer having the particle crystal structure is preferably not less than 3 μm and more preferably not less than 5 μm.

Furthermore, preferably the average particle size of the particle phosphor is not less than 0.1 times and not more than 10 times of the average column diameter of the column phosphor because it is possible to make the graininess excellect.

The average particle size of the particle phosphor is regulated in the above-described range because the particle size is so small that the production is difficult in case of the average particle size less than 0.1 times of the average column diameter, and to the contrary, unevenness and difference of luminance of crystals of layer having the particle crystal structure occurs to increase image roughness in case of the average particle size more than 10 times of the average column diameter.

Also, preferably neither the layer having the particle crystal structure nor the layer having the column crystal structure contains a binder.

In the radiographic image conversion panel of the present invention, the photostimulable phosphor layer contains a photostimulable phosphor represented by a following general formula (1):

general formula (1)

$$M^1X \cdot aM^2X'_2 \cdot bM^3X''_3 : eA$$

wherein $M^1$ represents at least one kind of alkali metal atom selected from atoms of Li, Na, K, Rb and Cs; $M^2$ represents at least one kind of divalent metal atom selected from atoms of Be, Mg, Ca, Sr, Ba, Zn, Cd, Cu and Ni; $M^3$ represents at least one kind of trivalent metal atom selected from atoms of Sc, Y, La, Ce, Pr, Nd, Pm, Sm, Eu, Gd, Tb, Dy, Ho, Er, Tm, Yb, Lu, Al, Ga and In; X, X' and X" represent at least one kind of halogen atom selected from atoms of F, Cl, Br and I; "A" in the formula (1) represents at least one kind of metal atom selected from atoms of Eu, Tb, In, Ce, Tm, Dy, Pr, Ho, Nd, Yb, Er, Gd, Lu, Sm, Y, Tl, Na, Ag, Cu and Mg; and a, b and e respectively represent values within the ranges of $0 \leq a < 0.5$, $0 \leq b < 0.5$ and $0 < e \leq 0.2$.

In particular, preferably the photostimulable phosphor layer comprises a column crystal of CsBr. By forming the photostimulable phosphor layer with a column crystal of CsBr, the photostimulable phosphor layer can be made to have high sensitivity and sharpness together and quality of a radiographic image can be improved significantly.

A method for producing a radiographic image conversion panel of the present invention comprises:

forming a photostimulable phosphor layer comprising a layer having a particle crystal structure containing a particle phosphor on a support and a layer having a column crystal structure containing a column phosphor on the layer having the particle crystal structure by a vapor phase deposition method; and
covering a photostimulable phosphor layer comprising the layer having the particle crystal structure and the layer having the column crystal structure with a protective layer.

According to the method for producing a radiographic image conversion panel of the present invention, because of forming a layer having the particle crystal structure on a support and a layer having the column crystal structure on the layer having the particle crystal structure by a vapor phase deposition method and then covering a photostimulable phosphor layer comprising the layer having the particle crystal structure and the layer having the column crystal structure with a protective layer, the graininess is good, variation of respective crystals constituting the layer having the column crystal structure can be made uniform and image unevenness can be removed. The difference of luminance of respective crystals of the layer having the column crystal structure can be reduced and image roughness is preventable. Therefore it is possible to improve the quality of a radiographic image significantly.

BRIEF DESCRIPTION OF THE DRAWINGS

The present invention will become more fully understood from the detailed description given hereinbelow and the accompanying drawings which are given by way of illustration only, and thus are not intended as a definition of the limits of the present invention, and wherein:

FIG. 1 is a schematic sectional view showing an example of a photostimulable phosphor layer formed on a support;
FIG. 2 is an illustration showing a situation that the photostimulable phosphor layer is formed on the support by an evaporation method; and
FIG. 3 is a sectional view showing a rough configuration of an evaporation apparatus.

PREFERRED EMBODIMENTS OF THE INVENTION

Hereinbelow, a radiographic image conversion panel and method for producing a radiographic image conversion panel according to the present invention will be described in detail.

A radiographic image conversion panel of the present invention comptises a support 11, a photostimulable phosphor layer 12 containing a particle phosphor and formed on the support 11, and a protective layer (not shown) coating on the photostimulable phosphor layer 12.

The photostimulable phosphor layer 12 comprises a layer having a particle crystal structure 12a provided on the side of the support 11 and containing the particle phosphor, and a layer having a column crystal structure 12b provided on the side of the protective layer and containing a column phosphor. In the layer having the column crystal structure 12b, spaces 14 are formed between a column crystals 13 of the photostimulable phosphor.

As above, the inventors found out that superior graininess and significant improvement of image quality of a radiographic image were accomplished by the photostimulable phosphor layer 12 comprising the layer having the particle crystal structure 12a provided on the side of the support 11 and the layer having the column crystal structure 12b provided on the side of the protective layer.

A support used for the present invention may be selected arbitrarily from heretofore materials as a support of a conventional radiographic image conversion panel. In case of a support in forming a phosphor layer by a vapor phase deposition method, however, quartz glass sheet, metallic sheet composed of aluminum, iron, tin, chromium, or the like, and carbon fiber reinforced sheet are preferable.

Additionally, the support preferably has a resin layer in order to make its surface glabrous.

The resin layer preferably contains a compound such as polyimide, polyethylene terephthalate, paraffin, and graphite, and the thickness of the resin layer is preferably about 5 μm to 50 μm. The resin layer may be provided on the face side, the back side or the both side.

Method for providing the resin layer onto the support includes lamination and coating.

A heat and pressure roller is employed for lamination. Preferably the heating condition is in the region of 80 to 150 °C , the pressure condition is $4.90 \times 10$ to $2.94 \times 10^2$ N/cm, and the transfer speed is 0.1 to 2.0 m/s.

The thickness of the photostimulable phosphor layer of the present invention, which varies with an intended purpose of the radiographic image conversion panel and a kind of the photostimulable phosphor, is 50 μm to 2000 μm, preferably 50 μm to 1000 μm and more preferably 100 μm to 800 μm from the viewpoint of obtaining an effect of the present invention.

In particular, the thickness of the layer having the particle crystal structure in the photostimulable phosphor layer is not less than 0.5 μm and not more than half of the thickness of the photostimulable phosphor layer, preferably. In particular, the thickness of the layer having the particle crystal structure is preferably not less than 3 μm and more preferably not less than 5 μm.

The thickness of the layer having the particle crystal structure is specified within the above-described range because the layer having the particle crystal structure is so thin that variation and luminescence difference of luminescence of each crystal constituting the layer having the column crystal structure can not be uniformed enough in case of the thickness less than 0.5 μm. In case of the thickness more than half of the thickness of the photostimulable phosphor layer, unevenness and uneven luminescence of crystals of the layer having the particle crystal structure are generated to the contrary.

In addition, the average particle size of the particle phosphor is preferably 0.1 times to 10 times of the average column diameter of the column phosphor.

The average particle size is specified within the above-described range because the particle size is so small that production of the particle phosphor is difficult in case of the average particle size less than 0.1 times of the average column diameter. In case of the average particle size more than 10 times of the average column diameter, unevenness and uneven luminescence of crystals of the layer having the particle crystal structure are generated to the contrary, and accordingly roughness of an image increase.

Furthermore the layer having the particle crystal structure and the layer having the column crystal structure do not contain a binder, preferably. In this way, it is preventable that the sensitivity of a radiographic image conversion panel to radial rays decreases by binder content.

The photostimulable phosphor layer preferably contains photostimulable phosphor represented by the following general formula (1):

general formula (1)

$$M^1X \cdot aM^2X'_2 \cdot bM^3X''_3 : eA$$

wherein $M^1$ represents at least one kind of alkali metal atom selected from atoms of Li, Na, K, Rb and Cs; $M^2$ represents at least one kind of divalent metal atom selected from atoms of Be, Mg, Ca, Sr, Ba, Zn, Cd, Cu and Ni; $M^3$ represents at least one kind of trivalent metal atom selected from atoms of Sc, Y, La, Ce, Pr, Nd, Pm, Sm, Eu, Gd, Tb, Dy, Ho, Er, Tm, Yb, Lu, Al, Ga and In; X, X' and X" represent at least one kind of halogen atom selected from atoms of F, Cl, Br and I; "A" in the fomula (1) represents at least one kind of metal atom selected from atoms of Eu, Tb, In, Ce, Tm, Dy, Pr, Ho, Nd, Yb, Er, Gd, Lu, Sm, Y, Tl, Na, Ag, Cu and Mg; and a, b and e respectively represent values within the ranges of $0 \leq a < 0.5$, $0 \leq b < 0.5$ and $0 < e \leq 0.2$.

As for photostimulable phosphor represented by the above-described general formula (1), $M^1$ represents at least one kind of alkali metal atom selected from atoms of Na, K, Rb, Cs and the like, preferably at least one kind of alkali metal atom selected from atoms of Rb and Cs, among others, and more preferably an atom of Cs.

$M^2$ represents at least one kind of divalent metal atom selected from atoms of Be, Mg, Ca, Sr, Ba, Zn, Cd, Cu and Ni, and a divalent metal atom selected from atoms of Be, Mg, Ca, Sr, Ba and the like is preferably used.

$M^3$ represents at least one kind of trivalent metal atom selected from atoms of Sc, Y, La, Ce, Pr, Nd, Pm, Sm, Eu, Gd, Tb, Dy, Ho, Er, Tm, Yb, Lu, Al, Ga, In and the like, and a trivalent metal atom selected from atoms of Y, Ce, Sm, Eu, Al, La, Gd, Lu, Ga, In and the like is preferably used.

"A" in the formula (1) represents at least one kind of metal atom selected from atoms of Eu, Tb, In, Ce, Tm, Dy, Pr, Ho, Nd, Yb, Er, Gd, Lu, Sm, Y, Tl, Na, Ag, Cu and Mg.

From the viewpoint of improvement of photostimulated luminescence luminance of a photostimulable phosphor, X, X' and X" represent at least one kind of halogen atom selected from atoms of F, Cl, Br and I, preferably at least one kind of halogen atom selected from atoms of F, Cl and Br, and more preferably at least one kind of halogen atom selected from atoms of Br and I.

In the general formula (1), the value of b is $0 \leq b < 0.5$ and preferably $0 \leq b < 10^{-2}$.

As for the above-described general formula (1), it is preferable to use a photostimulable phosphor whose matrix is CsBr of combination of atoms ($M^1$; Cs, X; Br) particularly in the present invention.

A photostimulable phosphor presented by the general formula (1) of the present invention is produced, for example, by the following method.

What is used as phosphor raw material is:

(a) at least one or more compounds selected from the group of NaF, NaCl, NaBr, NaI, KF, KCl, KBr, KI, RbF, RbCl, RbBr, RbI, CsF, CsCl, CsBr and CsI;

(b) at least one or more compounds selected from the group of $MgF_2$, $MgCl_2$, $MgBr_2$, $MgI_2$, $CaF_2$, $CaCl_2$, $CaBr_2$, $CaI_2$, $SrF_2$, $SrCl_2$, $SrBr_2$, $SrI_2$, $BaF_2$, $BaCl_2$, $BaBr_2$, $BaBr_2 \cdot 2H_2O$, $BaI_2$, $ZnF_2$, $ZnCl_2$, $ZnBr_2$, $ZnI_2$, $CdF_2$, $CdCl_2$, $CdBr_2$, $CdI_2$, $CuF_2$, $CuCl_2$, $CuBr_2$, $CuI_2$, $NiF_2$, $NiCl_2$, $NiBr_2$ and $NiI_2$; and

(c) in the general formula (1), a compound containing a metal atom selected from the group of Eu, Tb, In, Ce, Tm, Dy, Pr, Ho, Nd, Yb, Er, Gd, Lu, Sm, Y, Tl, Na, Ag, Cu and Mg.

The phosphor raw materials of (a) to (c) are weighed to be mixture of composition within the above-described numeric ranges and are dissolved with water.

In this case, a mortar, a ball mill or a mixer mill may be used for sufficient.

A predetermined acid is added in such a way that the pH value C of the obtained aqueous solution is adjusted within the range of $0 < C < 7$, and then water is evaporated.

The obtained raw material mixture fills a heat resistant container such as a quartz crucible and an alumina crucible and is calcined in an electric oven. The firing temperature is preferably 500 to 1000 °C. The firing time is preferably 0.5 to 6 hours, though the time varies with filling weight of the raw material mixture, firing temperature and the like.

A firing environment is preferably a mild reducing atmosphere, such as a nitrogen gas atmosphere containing hydrogen gas in a low dose and a carbon dioxide gas atmosphere containing carbon monoxide in a low dose, a neutral atmosphere, such as a nitrogen gas atmosphere and an argon gas atmosphere, or a mild oxidizing atmosphere containing oxygen gas in a low dose.

Additionally, it is allowed that calcined product is taken out of an electric oven and reduced to a powder after calcined in the above-described condition, and then again the powdered calcined product fills a heat resistant container and is placed in an electric oven to be recalcined in the same condition as above. Thereby it is possible to enhance the luminescence luminance of a photostimulable phosphor. When a calcined product is cooled down from the firing temperature to room temperature, a desired photostimulable phosphor can be obtained by taking the product out of the electric oven to stand to cool in the air, while the product may be cooled in a mild reducing atmosphere or a neutral atmosphere that is the same as in calcination.

Furthermore a calcined product is preferably moved from heating section to cooling section in an electric oven to be quenched in a mild reducing atmosphere, a neutral atmosphere or a mild oxidizing atmosphere. Thereby it is possible to further enhance the luminescence luminance of accelerated phosphorescence of the obtained photostimulable phosphor.

A photostimulable phosphor layer of the present invention is formed by a vapor phase deposition method.

Although an evaporation method, a sputtering method, a CVD method, an ion plating method or the like can be used as the vapor phase deposition method of photostimulable phosphor, the evaporation method is preferable in the present invention.

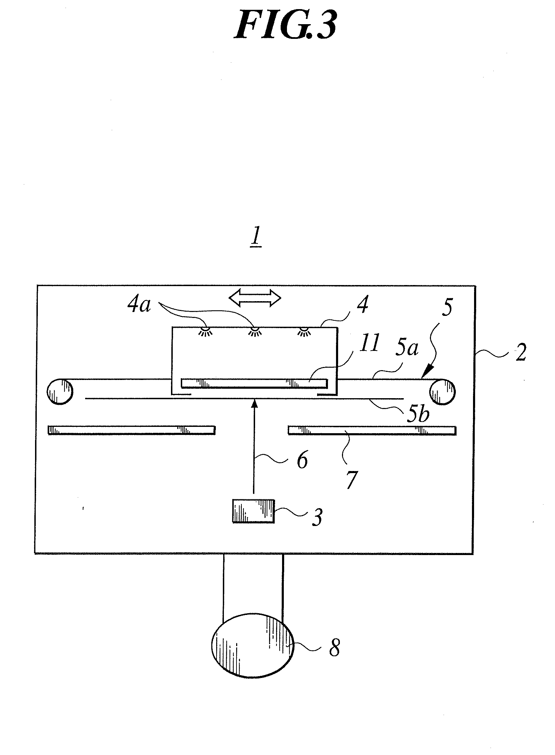

Hereinbelow, an evaporation method suitable for the present invention will be described. Because, in this discription, photostimulable phosphor is deposited onto a support by using an evaporation apparatus shown in FIG. 3, the description accompanies an explanation of the evaporation apparatus.

As shown in FIG. 3, an evaporation apparatus 1 comprises: a vacuum chamber 2; an evaporation source 3 provided in the vacuum chamber 2 and depositing evaporation onto a support 11; a support holder 4 holding the support 11; a support transport mechanism 5 that makes the support holder 4 reciprocate in the horizontal direction to the evaporation source 3, and thereby deposits evaporation from the evaporation source 3; a shield plate 7 provided between the support 11 and the evaporation source 3 so as to separate space from the evaporation source 3 to the support 11, wherein a slit 6 is formed; and a vacuum pump 8 for exhausting the vacuum container 2 and introducing air. The slit 6 is formed in a direction perpendicular to a transport direction A of the support.

Because the evaporation source 3 contains photostimulable phosphor and heats it by resistance heating, the evaporation source 3 may comprise an alumina crucible wound with a heater, a boat, or a heater constituted of a high melting point metal. Although, instead of resistance heating, a method for heating photostimulable phosphor may be a method as such heating by an electron beam and highfrequency induction heating, resistance heating is preferable in the present invention because of a relative simple structure, easy treatment, a low cost, applicability to very many kinds of material. The evaporation source 3 may be a molecular beam source by a molecular beam epitaxial method.

The support transport mechanism 5 comprises, for example, a transport wire 5a for transporting the support holder 4 in the horizontal direction, a guide rail 5b, and a motor as a driving source (not shown).

The support holder 4 is preferably provided with a heater 4a for heating the support 11. By heating the support 11, it is possible to remove abosorbate on the surface of the support 11 to prevent generation of an impurity layer between the surface of the support 11 and photostimulable phosphor, intensify adherence and adjust the membranous of a photostimulable phosphor layer.

For forming a photostimulable phosphor layer 12 on the support by use of the evaporation apparatus 1 constructed as above, a layer having the particle crystal structure 12a containing a particle phosphor is formed and then a layer having the column crystal structure 12b containing a column phosphor is formed.

That is, first the evaporation source 3 is disposed in the vacuum container 2, and the support holder 4 is attached to the support 11.

Secondly the vacuum container 2 is evacuated. In this time, inert gas such as Ar gas and Ne gas may be introduced.

Thereafter, the support transport mechanism 5 makes the support holder 4 reciprocate in the horizontal direction. When the vacuum container 2 achieves the vacuum for evaporation (for example, about $1 \times 10^{-5}$ to $1 \times 10^{-2}$ Pa), photostimulable phosphor is evaporated from the heated evaporation source 3 through the slit 6 of the shield plate and grows the layer having the particle crystal structure containing a particle phosphor on the surface of the support 11 to an intended thickness.

Additionally, the layer having the column crystal structure 12b containing a column phosphor is grown to an intended thickness on the layer having the particle crystal structure 12a by controlling the vacuum, for example, as it is not less than $10^{-1}$ Pa in this deposition.

The photostimulable phosphor to be used as the evaporation source is preferably processed into a shape of tablet by compression.

Instead of photostimulable phosphor, its raw material or raw material mixture may be used.

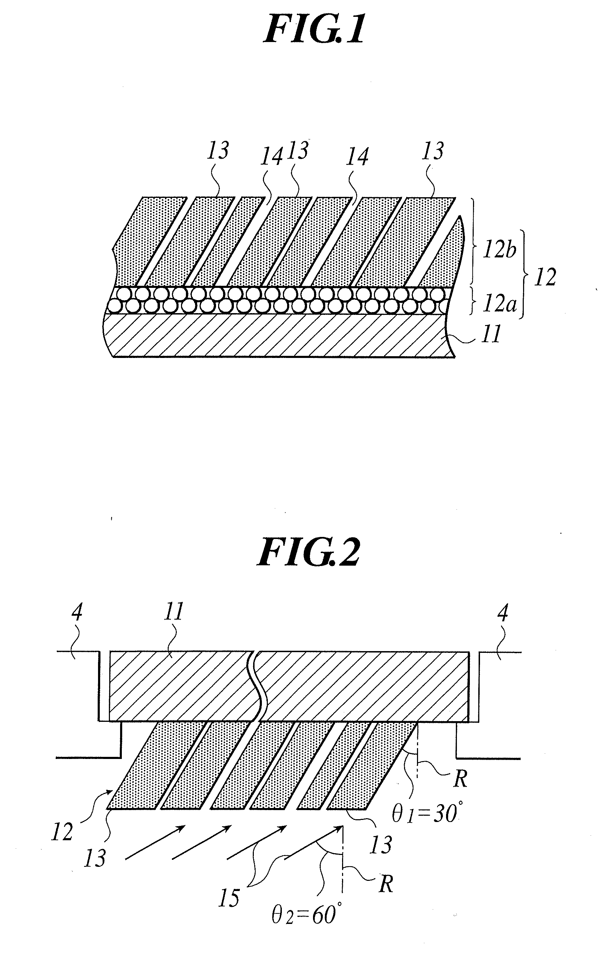

FIG. 2 is an illustration showing a concrete aspect that the photostimulable phosphor layer 12 is formed on the support 11 by deposition. When $\theta_2$ denotes an incident angle of a vapor flow of photostimulable phosphor 15 to the normal direction (R) to the surface of the support 11 fixed on the support holder 4 (60° in FIG. 2) and $\theta_1$ denotes an angle of a column crystal 13 to the normal direction (R) to the surface of the support (30° in FIG. 2), $\theta_1$ is about half of $\theta_2$ empirically and the column crystal 13 is formed at the angle. FIG. 3 shows the case that the incident angle $\theta_2$ of the vapor flow 15 is set at 0°.

Although the photostimulable phosphor layer 12 not containing a binder is formed here, a filler such as a binder may fill a void 14 formed between the column crystals 13 to reinforce the photostimulable phosphor layer 12. Alternatively material absorbing light highly or reflecting light highly may fill there. It is effective in reducing of lateral light diffusion of photostimulable excitation light entering the photostimulable phosphor layer 12 in addition to the effect of reinforcement.

As for the above-described evaporation step, it is also possible to form a photostimulable phosphor layer in a plurality of batches. Furthermore it is also possible to co-evaporate by use of a plurality of resistance heaters or electron beams, and simultaneously synthesize target photostimulable phosphor on the support and form a photostimulable phosphor layer.

As for an evaporation method, a substrate deposited on (support, protective layer or interlayer) may be cooled or heated in evaporation if necessary.

Furthermore the photostimulable phosphor layer may be heat-treated after the end of evaporation. As for an evaporation method, the reactive evaporation, which is evaporation with introduction of $O_2$, $H_2$ or the like, may be performed if necessary.

As for forming a photostimulable phosphor by the above-described vapor phase deposition method, the temperature of the support on which a photostimulable phosphor layer is formed is set preferably from room temperature to 300 °C and more preferably from 50 to 200 °C.

After a photostimulable phosphor layer provided with a layer having the particle crystal structure and layer having the column crystal structure is formed as above, a protective layer is provided on the opposite side of the photostimulable phosphor layer from the support, and thereby a radiographic image conversion panel of the present invention is produced. The protective layer may be formed by directly applying embrocation for forming a protective layer to the surface of the photostimulable phosphor layer, and also a protective layer may be formed separately in advance and attached to the photostimulable phosphor layer.

As material of the protective layer, such an usual material for a protective layer as cellulose acetate, cellulose nitrate, polymethylmethacrylate, polyvinylbutyral, polyvinylformal, polycarbonate, polyester, polyethylene terephthalate, polyethylene, poly(vinylidene chloride), nylon, poly(tetrafluoroethylene), poly(trifluoromonochloroethylene), tetrafluoroethylenehexafluoropropylene copolymer, vinylidene chloride-vinyl chloride copolymer, and vinylidene chloride-acrylonitrile copolymer, is used. Alternatively a transparent glass substrate may be used as the protective layer.

The protective layer may be formed by laminating such an inorganic material as SiC, $SiO_2$, SiN and $Al_2O_3$ by an evaporation method, a sputtering method and the like. The thickness of the protective layer is preferably 0.1 μm to 2000 μm.

EXAMPLE

Hereinbelow, the present invention is described referring examples; but the embodiments of the present invention are not limited to them.

Radiographic image conversion panels of Examples 1 to 7 and comparative Examples 1 and 2 were produced according to the following method.

<Example 1>

(Production of radiographic image conversion panel)

Onto the surface of a support of 1 mm-thick crystallized glass (manufactured by Nippon Electric Glass Co. Ltd.), a layer having the particle crystal structure containing a particle phosphor (CsBr:Eu) and then a layer having the column crystal structure containing a column phosphor (CsBr:Eu) were formed by use of the evaporation apparatus 1 shown in FIG. 3 (set $\theta_1 = 5°$ and $\theta_2 = 5°$ in FIG. 2).

That is, in the evaporation apparatus 1 shown in FIG. 3, a shield plate 7 made of aluminum was used and the distance between the support 11 and the shield plate 7 was 60 cm. Evaporation was performed while the support 11 was transported in the parallel direction to the support 11.

After the evaporation apparatus 1 was exhausted once, the vacuum was adjusted to $1.0 \times 10^{-1}$ Pa by introduction of Ar gas. The temperature of the support 11 is kept about 150 °C in evaporation, and evaporation was finished when the thickness of the layer having the particle crystal structure containing a particle phosphor grew to 3 μm.

Then evaporation was performed by controlling the vacuum at $1.0 \times 10^{-2}$ Pa in this evaporation, and evaporation was finished when the thickness of the layer having the column crystal structure containing a column phosphor grew to 500 μm.

Thereafter the photostimulable phosphor layer was put into a protective layer bag in dry air and a radiographic image conversion panel having the structure of a sealed photostimulable phosphor layer was obtained.

In the obtained radiographic image conversion panel, the average particle size of particle phosphor was 3 μm and the average column diameter of column phosphor was 3 μm.

<Example 2>

Except that the thickness of the layer having the particle crystal structure was made 10 μm, a radiographic image conversion panel was produced in the same way as Example 1. In the obtained radiographic image conversion panel, the average particle size of particle phosphor was 3 μm and the average column diameter of column phosphor was 3 μm.

<Example 3>

Except that the thickness of the layer having the particle crystal structure was made 100 μm, a radiographic image conversion panel was produced in the same way as Example 1. In the obtained radiographic image conversion panel, the average particle size of particle phosphor was 3 μm and the average column diameter of column phosphor was 3 μm.

<Example 4>

Except that the thickness of the layer having the particle crystal structure was made 400 μm, a radiographic image conversion panel was produced in the same way as Example 1. In the obtained radiographic image conversion panel, the average particle size of particle phosphor was 3 μm and the average column diameter of column phosphor was 3 μm.

<Example 5>

Except that the thickness of the layer having the particle crystal structure was made 600 μm, a radiographic image conversion panel was produced in the same way as Example 1. In the obtained radiographic image conversion panel, the average particle size of particle phosphor was 3 μm and the average column diameter of column phosphor was 3 μm.

<Example 6>

Except that the distance between the shield plate and the support was made 100cm and the thickness of the layer having the particle crystal structure was made 10 μm, a radiographic image conversion panel was produced in the same way as Example 1. In the obtained radiographic image conversion panel, the average particle size of particle phosphor was 1 μm and the average column diameter of column phosphor was 3 μm.

<Example 7>

The distance between the shield plate and the support was made 30cm and the thickness of the layer having the particle crystal structure was made 400 μm. Furthermore after forming the layer having the particle crystal structure, the distance between the shield plate and the support was returned to 60 cm and the layer having the column crystal structure was formed. A radiographic image conversion panel was produced otherwise in the same way as Example 1. In the obtained radiographic image conversion panel, the average particle size of particle phosphor was 40 μm and the average column diameter of column phosphor was 3 μm.

<Comparative example 1>

The layer having the column crystal structure was formed directly on the support in such a way that the thickness of the layer having the column crystal structure was 500 μm without forming the layer having the particle crystal structure. A radiographic image conversion panel was produced otherwise in the same way as Example 1. In the obtained radiographic image conversion panel, the average column diameter of column phosphor was 3 μm.

<Comparative example 2>

The layer having the column crystal structure was formed directly on the support in such a way that the thickness of the layer having the column crystal structure was 10 μm without forming the layer having the particle crystal structure, and furthermore on the layer having the column crystal structure, another layer having the column crystal structure was formed in such a way that the thickness of the layer having the column crystal structure was 500 μm. A radiographic image conversion panel was produced otherwise in the same way as Example 1. In the obtained radiographic image conversion panel, both of the average column diameter of column phosphor constituting the layer having the column crystal structure on the side of the support and the average column diameter of column phosphor constituting the layer having the column crystal structure on the side of the protective layer were 3 μm.

The radiographic image conversion panels obtained as above were evaluated as below.

<<Graininess (noise)>>

After the radiographic image conversion panels were exposed to X-rays having tube voltage of 80 kVp, the panel was scanned by a He-Ne laserbeam (633 nm) to be excited. Photostimulated luminescence emitted from the photostimulable phosphor layer was received by a photo detector (a photomultiplier tube of spectral sensitivity of S-5) to be transformed into an electric signal. The signal was reproduced as an image by a picture reproducer to be outputted by a laser imager. The image obtained thereby was observed with eyes and noise was evaluated. Noise was evaluated on 5-point scale of 1 to 5 as below. The results are shown in Table 1.

5: almost no noise is observed
4: noise exists but no problem
3: some noise is observed
2: there is a lot of noise
1: there is too much to be evaluated

If an image was 3 or more in the above-described rank, it was judged as no problem in practical use.

Table 1

| | Phosphor material | Lower layer | | | | Upper layer | | Graini-ness |
|---|---|---|---|---|---|---|---|---|
| | | Particle size (μm) | Thick-ness (μm) | Column diameter (μm) | Thick-ness (μm) | Column diameter (μm) | Thick-ness (μm) | |
| Example 1 | CsBr:Eu | 3 | 3 | – | – | 3 | 500 | 3 |
| Example 2 | CsBr:Eu | 3 | 10 | – | – | 3 | 500 | 5 |
| Example 3 | CsBr:Eu | 3 | 100 | – | – | 3 | 500 | 5 |
| Example 4 | CsBr:Eu | 3 | 400 | – | – | 3 | 500 | 4 |
| Example 5 | CsBr:Eu | 3 | 600 | – | – | 3 | 500 | 3 |
| Example 6 | CsBr:Eu | 1 | 10 | – | – | 3 | 500 | 4 |
| Example 7 | CsBr:Eu | 40 | 400 | – | – | 3 | 500 | 3 |
| Comparative example 1 | CsBr:Eu | – | – | – | – | 3 | 500 | 2 |
| Comparative example 2 | CsBr:Eu | – | – | 3 | 10 | 3 | 500 | 2 |

As it was clear from results of Table 1, radiographic image conversion panels of Examples 1 to 7, comprising a layer having the particle crystal structure formed on a support and a layer having the column crystal structure formed on the layer having the particle crystal structure, were higher in rank of noise and better at graininess than comparative Examples 1 and 2 that did not form a layer having the particle crystal structure on a support.

Furthermore according to the results of Example 1 and 2, the thickness of a layer having the particle crystal structure is preferably 10 μm to 100 μm and the average particle size of particle phosphor is preferably as much as the average column diameter of column phosphor.

Accordingly, a photostimulable phosphor layer is formed by forming a layer having the column crystal structure containing a column phosphor on a layer having the particle crystal structure after the layer having the particle crystal structure containing a particle phosphor is formed on a support, and then the photostimulable phosphor layer is coated with a protective layer. Thereby it is possible to abate noise as small as no problem in practical use and improve image quality of a radiographic image.

While the Examples of the present invention are described as above, it is obvious that the present invention is not limited to the Examples and can be modified variously within the scope not departing from the gist thereof.

The entire disclosure of Japanese Patent Applications No. Tokugan 2003-341610 filed on September 30, 2003 including specification, claims, drawings and summary are incorporated herein by reference in its entirety.

**Claims**

1. A radiographic image conversion panel comprising:

   a support on which a photostimulable phosphor layer containing a photostimulable phosphor is formed; and
   a protective layer for covering the photostimulable phosphor layer,

   wherein the photostimulable phosphor layer comprises a layer having a particle crystal structure containing a particle phosphor provided on a side of the support, and a layer having a column crystal structure containing a column phosphor provided on a side of the protective layer.

2. The radiographic image conversion panel of claim 1, wherein a thickness of the layer having the particle crystal structure is not less than 0.5 μm and not more than half of a thickness of the photostimulable phosphor layer.

3. The radiographic image conversion panel of claim 2, wherein the thickness of the layer having the particle crystal structure is not less than 3.0 μm.

4. The radiographic image conversion panel of claim 3, wherein the thickness of the layer having the particle crystal structure is not less than 5.0 μm.

5. The radiographic image conversion panel of any one of claim 1 to 4, wherein an average particle size of the particle phosphor is not less than 0.1 times and not more than 10 times of an average column diameter of the column phosphor.

6. The radiographic image conversion panel of any one of claim 1 to 5, neither the layer having the particle crystal structure nor the layer having the column crystal structure contains a binder.

7. The radiographic image conversion panel of claim 6, wherein the photostimulable phosphor layer contains a photostimulable phosphor represented by a following general formula (1):

general formula (1)

$$M^1 X \cdot a M^2 X'_2 \cdot b M^3 X''_3 : eA$$

wherein $M^1$ represents at least one kind of alkali metal atom selected from atoms of Li, Na, K, Rb and Cs; $M^2$ represents at least one kind of divalent metal atom selected from atoms of Be, Mg, Ca, Sr, Ba, Zn, Cd, Cu and Ni; $M^3$ represents at least one kind of trivalent metal atom selected from atoms of Sc, Y, La, Ce, Pr, Nd, Pm, Sm, Eu, Gd, Tb, Dy, Ho, Er, Tm, Yb, Lu, Al, Ga and In; X, X' and X" represent at least one kind of halogen atom selected from atoms of F, Cl, Br and I; "A" in the formula (1) represents at least one kind of metal atom selected from atoms of Eu, Tb, In, Ce, Tm, Dy, Pr, Ho, Nd, Yb, Er, Gd, Lu, Sm, Y, Tl, Na, Ag, Cu and Mg; and a, b and e respectively represent values within the ranges of $0 \leq a < 0.5$, $0 \leq b < 0.5$ and $0 < e \leq 0.2$.

8.  The radiographic image conversion panel of any one of claim 1 to 7, wherein the photostimulable phosphor layer comprises a column crystal of CsBr.

9.  A method for producing a radiographic image conversion panel comprising:

 forming a photostimulable phosphor layer comprising a layer having a particle crystal structure containing a particle phosphor on a support and a layer having a column crystal structure containing a column phosphor on the layer having the particle crystal structure by a vapor phase deposition method; and covering the photostimulable phosphor layer with a protective layer.

# *FIG.1*

# *FIG.2*

# FIG.3